# NEW EUROPEAN PATENT SPECIFICATION

(11) **EP 0 144 145 B2**
(45) Date of publication and mention of the opposition decision: **06.07.1994**
(45) Mention of the grant of the patent: 04.10.1989
(21) Application number: 84307372.7
(22) Date of filing: 26.10.1984
(51) Int. Cl.: F02F 3/00, F16J 1/16

(54) **Pistons**
Kolben
Pistons

(30) Priority: 29.10.1983 GB 8328931; 23.12.1983 GB 8334434; 08.12.1983 GB 8332817
(43) Date of publication of application: 12.06.1985
(73) Proprietor: AE PLC, Rugby Warwickshire CV22 7SB (GB)
(72) Inventor: Bruni, Ludovico, Turin (IT); Murray, Edward John, West Yorkshire LS29 9BW (GB); Thomson, Frederick Herbert, Bradford West Yorkshire BD13 1HD (GB)
(74) Representative: Knott, Stephen Gilbert

(56) References cited:
- DE-A- 2 504 910
- DE-A- 3 235 220
- DE-C- 708 646
- FR-A- 673 364
- FR-A- 870 737
- FR-A- 2 238 372
- GB-A- 115 576
- GB-A- 176 157
- GB-A- 556 444
- US-A- 1 507 490
- US-A- 1 561 030
- US-A- 2 032 849
- US-A- 2 198 689
- US-A- 2 372 993
- Mahle-Kolbenlexikon, p. 4, "illustrated Glossary"

## Description

The invention relates to pistons for internal combustion engines of the kind comprising a crown, a ring band extending around the crown and including two or more piston ring grooves, and a pair of co-axial gudgeon pin bores which receive a gudgeon pin by which the piston is attached to an associated connecting rod.

Such a piston also has a skirt which depends from the ring band and which is intersected by the gudgeon pin bores. The lower edge of the skirt defines the lower edge of the piston. In use, the piston reciprocates in an associated cylinder or liner formed in an engine block and, for a given stroke of the piston, the height of the block, and consequently the mass of the block is determined at least in part by the axial length of the piston from the crown to the lower edge; the shorter the axial length, the lower the height of the block.

US-A-2372993 and GB-A-1155176 show a piston according to the preamble of claim 1. In US-A-2372993, the gudgeon pin bores intersect the skirt beneath the ring band. In GB-A-115176 the skirt is cut away around the gudgeon pin bores and spaced piston ring grooves are provided on the skirt.

DE-C-708646 shows a piston for an internal combustion engine according to the preamble of claim 3.

FR-A-2238372 shows a piston in which a first piston part forms an inner portion of the crown, gudgeon pin bores and a lower part of the ring band containing a lowermost piston ring groove. A second piston part forms an outer periphery of the crown and an upper part of the ring band containing two piston ring grooves. A third piston part is sleeve-shaped and forms a skirt having gudgeon pin bores in register with the gudgeon pin bores of the first part. The three piston parts are welded together to form a complete piston.

DE-A-2504910 discloses a piston primarily for a refrigerant compressor comprising a crown and a skirt extending around the piston to a lower edge. A pair of co-axial gudgeon pin bores intersect the skirt and are for receipt of a gudgeon pin. One piston ring groove is provided adjacent the crown and a second piston ring groove is provided in the skirt and has upper and lower radially extending side walls connected by a base, the upper radially extending side wall being continuous around the skirt and the gudgeon pin bores intersecting the lower radially extending side wall of the second piston ring groove so that a piston ring in said groove is unsupported at the two diametrically opposed portions of the lower side wall where the bores intersect said wall.

According to a first aspect of the invention, there is provided a piston for an internal combustion engine formed in one piece of the kind comprising a crown, at least two axially spaced piston ring grooves, a lowermost of said at least two axially spaced piston ring grooves having upper and lower axially spaced and radially extending side walls connected by a base, said upper radially extending side wall being continuous around the piston, a skirt extending around the piston beneath the lowermost of said at least two axially spaced piston ring grooves and having a lower edge, and a pair of co-axial bores being provided for receiving a gudgeon pin, said pair of bores intersecting the lower side wall and the base of said lowermost of said at least two piston ring grooves, a piston ring in said lowermost of said pair of piston ring grooves being unsupported at the two diametrically opposed portions of said lower side wall where the bores intersect said lowermost of said pair of piston ring grooves, the at least two piston ring grooves being formed in a ring band surrounding the crown, said pair of bores intersecting the ring band and being located at least substantially equidistandly between the crown and said lower edge.

According to a second aspect of the invention, there is provided a piston for an internal combustion engine of the kind comprising a separately formed upper piston part including a crown, at least two axially spaced piston ring grooves and a pair of co-axial bores for receiving a gudgeon pin, and a separately formed sleeve-shaped lower piston part connected to said upper piston part and forming a skirt whereby said upper piston part forms an upper portion of a ring band surrounding the crown, the lower piston part providing at least one further piston ring groove characterised in that said at least one further piston ring groove iO spaced axially from a lowermost of said at least two piston ring grooves by substantially the same axial distance as the spacing of said at least two axially spaced piston ring grooves to provide a lower portion of said ring band formed as a continuation of said upper portion of the ring band, said pairs of co-axial bores terminating inwardly of said second piston part so that the ends of said pair of gudgeon pin bores are covered by said sleeve-shaped lower piston part and imaginary extensions thereof at least partially intersecting the ring band through said at least one further piston ring groove to reduce the overall height of the piston.

The following is a more detailed description of some embodiments of the invention, by way of example, reference being made to the accompanying drawings in which:-
Figure 1 is a side elevation, partly in section, of a first form of piston for an internal combustion engine,
Figure 2 is a side elevation, partly in section, of a second form of piston for an internal combustion engine, the piston being formed in two parts,
Figure 3 is a section on the line IV IV of Figure 2, and
Figure 4 is an underneath plan view of the piston of Figures 2 and 3, the lower half of this view being in section,

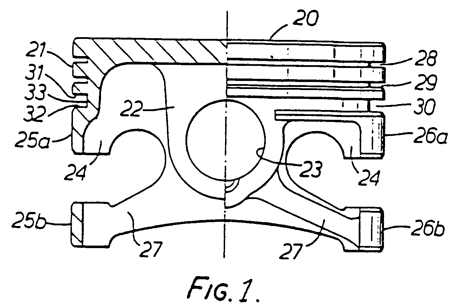

Referring first to Figure 1, in this embodimentthe piston is cast or forged from aluminium or an aluminium alloy; for example it may be made by a squeeze casting process. The piston comprises a crown 20 surrounded by a ring band 21. A gudgeon pin boss 22 defines a pair of co-axial gudgeon pin bores 23 and supports the crown 20 and ring band 2' on flanges 24. A skirt is formed by two pairs of arcuate skirt portions 25a, 25b, 26a, 26b arranged on opposite sides of a plane including the piston axis and the gudgeon pin bore axis, The upper skirt portions 25a, 26a, of each pair depend from the ring band 21 while the lower skirt portions 25b, 26b are carried on the ends of limbs 27 extending from the gudgeon pin boss 22.

The ring band 21 is provided with three piston ring grooves 28, 29, 30, with each groove comprising upper and lower axially spaced radially extending side walls 31, 32 connected by a base 33. In the case of the two upper piston ring grooves 28, 29 the walls 31, 32 and the base 33 are continuous around the whole circumference of the piston. In the case of the lower piston ring groove 30, however, the gudgeon pin bores 23 are so arranged that they intersect the lower wall 32 and the base 33 of this groove 30 at diametrically opposed points on the circumference of the ring band 21.

The two upper piston ring grooves 28, 29 contain compression rings (not shown) of any suitable conventional design while the lower groove 30 contains an oil I scraper ring (not shown) of any suitable conventional design. Although the oil scraper ring will be unsupported on one side for a part of its circumference, this has not, in general, been found to be a problem. If there is any problem, a clip-on support may be provided which spans the gap to support this part of the ring. In addition, the ring may be positively located to prevent its rotational movement, thus preventing a gap provided in the ring from coinciding with the gap in the lower side wall 32.

The gudgeon pin (not shown) can also be of conventional design since there is no problem with the passage of gases between the gudgeon pin and the gudgeon pin bores 13 due to the two compression rings above the gudgeon pin bores 23.

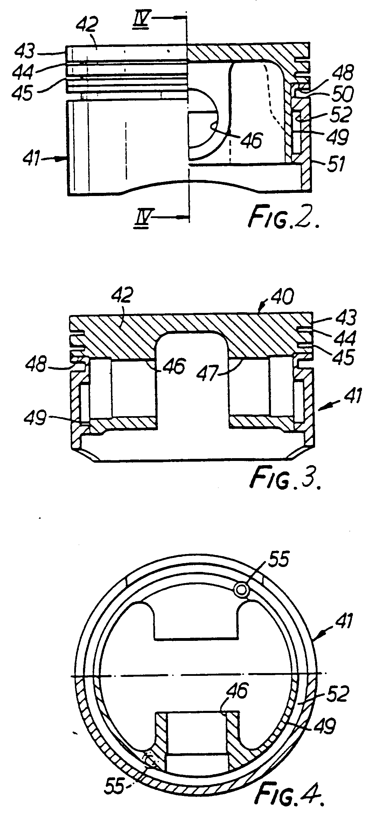

Referring next to Figures 2, 3 and 4, the second piston is formed in two parts; an upper part 40 and a lower part 41. These may be forged or cast, particularly squeeze cast, from aluminium or aluminium alloys. The material may be the same for both parts or different. Alternatively, the upper part can be made from a suitable metallic material and the lower part from a suitable plastics material.

The upper part40 defines a crown 42 and the upper portion of a ring band 43 which includes two piston ring grooves 44, 45 extending around the ring band 43. The upper part 40 also defines two gudgeon pins 46, 47 whose radially outer ends terminate inwardly of the ring band 43 (see Fig. 3). At the lower edge of the ring band 43, there is an inwardly directed step 48 leading to a generally cylindrical surface 49 extending around the gudgeon pin bores 46, 47 (see Figs. 2 and 4).

The lower part 41 is formed as a sleeve and includes, at the upper end thereof, a piston ring groove 50. The outer surface 51 of the sleeve 41 forms a skirt for the piston. The inner surface of the sleeve is formed with an annular cavity 52 which forms a heat barrier.

The sleeve 41 is a sliding fit over the generally cylindrical surface 49 of the upper part 40, so that the top of the sleeve sits in the step 48 and the outer surface of the ring band 43 is contiguous with the outer surface 51 of the sleeve. The sleeve 41 is connected to the upper part 40 in any convenient way, for example by welding, particularly by friction welding, or by gluing or by shrinking, or by screwing or by the use of releasable mechanical locking means. An example of the latter is a tab washer or screws 55 as seen in Figure 2.

It will be seen that the sleeve 41 covers the open ends of the gudgeon pin bores 46, 47 and that an imaginary extension of the gudgeon pin bores partially intersects the lower part of the ring band and the piston ring groove 50 formed on the sleeve, It will be appreciated, however, that the sleeve 41 need not be formed in one piece, it could be formed in two or more pieces.

Where the sleeve is in one piece, the gudgeon pin (not shown) must be pressed through the gudgeon pin bores and the little end of the connecting rod before the sleeve 41 is fitted over the upper part 40 of the piston.

It will be seen that both the embodiments described above with reference to the drawings, the gudgeon pin bores are very close to the crown end of the piston. This means that the overall axial length of the piston from the crown 20 to the lower edge can be decreased. For example, the axial length of the piston may be 50% to 70% of the diameter of the piston.

This has the advantage that the compression height (i.e. the distance between the axes of the gudgeon pin bores 23 and the top of the crown of the piston is minimised, which is a desirable object in piston design.

This has the benefit that, for a given stroke of engine, the height of the engine can be decreased. This will give a smaller engine which decreases the weight of the vehicle and also lowers the bonnet line of the vehicle. This can allow styling improvements to be made and will also increase the drivers forward visibility from the interior of the vehicle. Further, the piston is short and light which decreases its inertia and increases its acceleration so improving the performance of the engine.

A further advantage of these arrangements is that they allow a gudgeon pin to be used which is of relatively large diameter without increasing he compression height of the piston.

It will also be seen that the gudgeon pin bore is arranged substantially equidistantly between the crown and the lower edge of the piston in both the embodiments described above with reference to the drawings. This means that the piston is, in use, better balanced, and requires less barrelling of the associated cylinder or liner.

A particular benefit of the second piston (Figs. 2 to 4) is that it allows the gudgeon pin bores to be moved well up into the ring band region without affecting the support given to the piston rings by the piston ring grooves. As will be seen, there is support for the lowermost piston ring around the whole circumference of the piston. In the second piston (Figs. 2 to 4) the presence of the gap between the upper and lower parts 40, 41 means that the lower part will be cool.

## Claims

1. A piston for an internal combustion engine formed in one piece of the kind comprising a crown (20), at least two axially spaced piston ring grooves (28,29,30), a lowermost (30) of said at least two axially spaced piston ring grooves having upper and lower axially spaced and radially extending side walls (31,32) connected by a base (33), said upper radially extending side wall (31) being continuous around the piston, a skirt (25,26) extending around the piston beneath the lowermost of said at least two piston ring grooves (28,29,30) and having a lower edge, and a pair of co-axial bores (23) being provided for receiving a gudgeon pin, said pair of bores (23) intersecting the lower side wall (32) and the base (33) of said lowermost (30) of said at least two piston ring grooves, a piston ring in said lowermost of said pair of piston ring grooves being unsupported at the two diametrically opposed portions of said lower side wall (32) where the bores (23) intersect said lowermost (30) of said pair of piston ring grooves, the at least two piston ring grooves (28,29,30) being formed in a ring band (21) surrounding the crown (20), said pairof bores (23) intersecting the ring band (21) and being located at least substantially equidistantly between the crown (20) and said lower edge.

2. A piston according to claim 1, characterised in that the skirt (25, 26) is formed by two pairs of arcuate skirt members (25a, 25b, 26a, 26b), the pairs being arranged on opposite sides of a plane including the piston axis and the gudgeon pin bore axis, one skirt member (25a, 26a) of each pair depending from the ring band and being spaced by an axially and circumferentially extending gap from the other skirt member of the pair (25b, 26b), which is connected by limbs (27) to a gudgeon pin boss of the piston.

3. A piston for an internal combustion engine of the kind comprising a separately formed upper piston part (40) including a crown (42), at least two axially spaced piston ring grooves (44, 45) and a pair of co-axial bores (47) for receiving a gudgeon pin, and a separately formed sleeve-shaped lower piston part (41) connected to said upper piston part and forming a skirt (51) whereby said upper piston part (40) forms an upper portion of a ring band (43) surrounding the crown, the lower piston part (41) providing at least one further piston ring groove (50) characterised in that said at least one further piston ring groove (50) is spaced axially from a lowermost (45) of said at least two piston ring grooves (44, 45) by substantially the same axial distance as the spacing of said at least two axially spaced piston ring grooves (44, 45) to provide a lower portion of said ring band formed as a continuation of said upper portion of the ring band, said pair of co-axial bores (46) terminating inwardly or said second piston part (41) so that the ends of said pair of gudgeon pin bores (46,47) are covered by said sleeve-shaped lower piston part and imaginary extensions thereof at least partially intersecting the ring band (43) through said at least one further piston ring groove (50) to reduce the overall height of the pis-

## Patentansprüche

1. Kolben für eine Brennkraftmaschine gebildet aus einem Stück von der Art mit einer Krone (20), wenigstens zwei axial beabstandeten Kolbenringnuten, wobei die unterste (30) der wenigstens zwei axial beabstandeten Kolbenringnuten obere und untere axial beabstandete und radial sich erstreckende Seitenwände (31, 32) aufweist, die durch eine Basis (33) verbunden sind, wobei die obere radial sich erstreckende Seitenwand (31) kontinuierlich sich um den Kolben herum erstreckt, ein Rand (25, 26), der unterhalb der untersten der wenigstens zwei Kolbenringnuten (28, 29, 30) um den Kolben herum verläuft und eine untere Kante hat, und ein Paar von koaxialen Bohrungen (23) vorgesehen sind, zur Aufnahme eines Kolbenbolzens, wobei das Paar von Bohrungen (23) die untere Seitenwand (32) und die Basis (33) der untersten (30) derwenigstens zwei Kolbenringnuten kreuzt, wobei ein Kolbenring in der untersten des Paares der Kolbenringnuten freitragend an den zwei diametral gegenüberliegenden Bereichen der unteren Seitenwand (32) ist, wo die Bohrungen (23) die unterste (30) des Paares der Kolbenringnuten kreuzen, wobei die wenigstens zwei Kolbenringnuten (28, 29, 30) in einem Ringbund (21) ausgebildet sind, der die Krone (20) umgibt, wobei das Paar von Bohrungen (23) den Ringbund (21) kreuzt und sich wenigstens im wesentlichen in gleichem Abstand zwischen der Krone (20) und der unteren Kante befindet.

2. Kolben nach Anspruch 1, dadurch gekennzeichnet, daß der Rand (25, 26) aus zwei Paaren von bogenförmigen Randteilen (25a, 25b, 26a, 26b) gebildet ist, wobei die Paare an gegenüberliegenden Seiten einer Ebene angeordnet sind, die die Kolbenachse und die Kolbenbolzenbohrungsachse enthält, wobei ein Randteil (25a, 26a) eines jeden Paares von dem Ringbund abhängt und durch einen axialen und sich in Umfangsrichtung erstreckenden Spalt von dem anderen Randteil des Paares (25b, 26b) beabstandet ist, welches durch Glieder (27) mit einem Kolbenbolzenvorsprung des Kolbens verbunden ist.

3. Kolben für eine Brennkraftmaschine von der Art mit einem getrennt ausgebildeten oberen Kolbenteil (40), der eine Krone (42), wenigstens zwei axial beabstandete Kolbenringnuten (44,45) und ein Paar von koaxialen Bohrungen (47) zur Aufnahme eines Kolbenbolzens und einen getrennt gebildeten büchsenförmigen unteren Kolbenbereich (41) umfaßt, der mit dem oberen Kolbenbereich verbunden ist und einen Rand (51) bildet, wodurch der obere Kolbenbereich (40) einen oberen Bereich eines Ringbundes (43) bildet, der die Krone umgibt, der untere Kolbenbereich (41) wenigstens eine weitere Kolbenringnut (50) bildet, dadurch gekennzeichnet, daß wenigstens eine weitere Kolbenringnut (50) axial von der untersten (45) der wenigstens zwei Kolbenringnuten (44, 45) beabstandet ist mit im wesentlichen demselben axialen Abstand wie die Beabstandung der wenigstens zwei axial beabstandeten Kolbenringnuten (44, 45), um einen unteren Bereich des Ringbundes zu bilden, der als eine Fortsetzung des oberen Bereichs des Ringbundes gebildet ist, wobei das Paar der koaxialen Bohrungen (46) im Inneren des zweiten Kolbenbereichs (41) endet, so daß die Enden des Paars der Kolbenbolzenbohrungen (46, 47) von dem büchsenförmigen unteren Kolbenbereich bedeckt sind, und imaginäre Verlängerungen hiervon wenigstens teilweise den Ringbund (43) durch die wenigstens eine weitere Kolbenringnut (50) kreuzen, um die Gesamthöhe des Kolbens zu reduzieren.

## Revendications

1. Piston pour moteur à combustion interne, formé en une seule pièce, du type qui comporte une calotte (20), au moins deux gorges axialement espacées (28, 29, 30) de logement de segments, une gorge inférieure (30) des deux gorges au moins espacées axialement ayant des parois latérales supérieure et inférieure (31, 32) disposées radialement, espacées axialement et reliées par une base (33), la paroi latérale radiale supérieure (31) étant continue tout autour du piston, une jupe (25, 26) étant placée autour du piston sous la gorge inférieure des deux gorges au moins (28, 29, 30) de logement de segments et ayant un bord inférieur, et deux alésages coaxiaux (23) étant disposés afin qu'ils logent un axe de pied de bielle, les deux alésages (23) recoupant la paroi latérale inférieure (32) et la base (33) de la gorge inférieure (30) parmi les deux gorges au moins de logement de segments, un segment logé dans la gorge inférieure des deux gorges de logement de segments n'étant pas supporté dans deux parties diamétralement opposées de la paroi latérale inférieure (32) à l'endroit où les alésages (23) recoupent la gorge inférieure (30) des deux gorges au moins de logement de segment, les deux gorges au moins de logement de segments (28, 29, 30) étant formées dans une bande (21) de support de segments entourant la calotte (20), la paire d'alésages (23) recoupant la bande (21) de support de segments et étant placée au moins de manière pratiquement équidistante entre la calotte (20) et le bord inférieur.

2. Piston selon la revendication 1, caractérisé en ce que la jupe (25, 26) est formée par deux paires d'organes courbes (25a, 25b, 26a, 26b), les paires étant disposées de part et d'autre d'un plan contenant l'axe du piston et l'axe des alésages de passage de l'axe de pied de bielle, un organe de jupe (25a, 26a) de chaque paire dépassant de la bande de support des segments et étant séparé de l'autre organe de jupe (25b, 26b) de la paire qui est raccordée par des branches (27) à une saillie de passage d'axe de pied de bielle, par un espace disposé axialement et circonférentielle- ment.

3. Piston pour moteur combustion interne, du type qui comporte une partie supérieure (40) de piston, formée séparément et comprenant une calotte (42), au moins deux gorges (44, 45) de logement de segments, espacées axialement, et deux alésages coaxiaux (47) destinés à loger un axe de pied de bielle, et une partie inférieure (41) de piston, ayant une forme de manchon, formée séparément, raccordée à la partie supérieure du piston et formant une jupe (51), si bien que la partie supérieure (40) de piston forme une partie supérieure d'une bande (43) de support de segments qui entoure la calotte, la partie inférieure (41) de piston formant au moins une gorge supplémentaire (50) de logement de segment, caractérisé en ce que la gorge supplémentaire au moins (50) de logement de segment est disposée axialement à distance d'une gorge inférieure (45) des deux gorges au moins (44, 45) de logement de segments dont elle est séparée par une distance axiale pratiquement égale à la distance comprise entre les deux gorges axialement espacées (44, 45) de logement de segments, afin qu'une partie inférieure de la bande de support de segments soit formée comme prolongement de la partie supérieure de la bande de support de segments, la paire d'alésages coaxiaux (46) aboutissant à l'intérieur de la seconde partie (41) de piston afin que les extrémités des deux alésages (46, 47) de passage d'axe de pied de bielle soient couvertes par la partie inférieure de piston en forme de manchon et que leurs prolongements imaginaires recoupent au moins partiellement la bande (43) de support de segments par ladite gorge supplémentaire au moins (50) de logement de segment afin que la hauteur totale du piston soit réduite.
